# EUROPEAN PATENT SPECIFICATION

(11) **EP 1 797 675 B1**
(45) Date of publication and mention of the grant of the patent: **23.07.2008**
(21) Application number: 04790150.9
(22) Date of filing: 06.10.2004
(51) Int. Cl.: H04L 12/56, H04L 12/18

(54) **SOURCE SPECIFIC MULTICAST ROUTING**
QUELLENSPEZIFISCHES MULTICAST-ROUTING
ROUTAGE MULTIDIFFUSION SPECIFIQUE DE SOURCE

(43) Date of publication of application: 20.06.2007
(73) Proprietor: NTT DoCoMo, Inc., Tokyo 100-6150 (JP)
(72) Inventor: MENDES, Paulo, 81675 München (DE)
(74) Representative: HOFFMANN EITLE
(86) International application number: PCT/EP2004/011166
(87) International publication number: WO 2006/037362

(56) References cited:
- US-A- 5 331 637
- HODEL H: "POLICY TREE MULTICAST ROUTING: AN EXTENSION TO SPARSE MODE SOURCE TREE DELIVERY" COMPUTER COMMUNICATION REVIEW, ASSOCIATION FOR COMPUTING MACHINERY. NEW YORK, US, vol. 28, no. 2, April 1998 (1998-04), pages 78-97, XP000774639 ISSN: 0146-4833 cited in the application
- MAGONI D ET AL: "Network layer search service using oriented multicasting" PROCEEDINGS IEEE INFOCOM 2002. THE CONFERENCE ON COMPUTER COMMUNICATIONS. 21ST. ANNUAL JOINT CONFERENCE OF THE IEEE COMPUTER ANDCOMMUNICATIONS SOCIETIES. NEW YORK, NY, JUNE 23 - 27, 2002, PROCEEDINGS IEEE INFOCOM. THE CONFERENCE ON COMPUTER COMMUNICA, vol. VOL. 1 OF 3. CONF. 21, 23 June 2002 (2002-06-23), pages 1346-1355, XP010593701 ISBN: 0-7803-7476-2
- STOICA I ET AL: "REUNITE: a recursive unicast approach to multicast" INFOCOM 2000. NINETEENTH ANNUAL JOINT CONFERENCE OF THE IEEE COMPUTER AND COMMUNICATIONS SOCIETIES. PROCEEDINGS. IEEE TEL AVIV, ISRAEL 26-30 MARCH 2000, PISCATAWAY, NJ, USA,IEEE, US, vol. 3, 26 March 2000 (2000-03-26), pages 1644-1653, XP010376102 ISBN: 0-7803-5880-5

## Description

### 1. Field of the invention

The present invention relates to setting multicast routing tables in a multicast communication system for reference by a routing note during a multicast tree set-up for a transmission of a multicast data from a source to a multicast destination.

### 2. Background of the invention

Wireless communication networks are becoming increasingly popular and co-exist with or may even replace traditional wireline communication networks. Wireless networks enable users to wirelessly transmit information to other users, such as for a transmission of communication data to a telephone terminal or for a data communication between computing devices. Mobile computing devices and mobile telephones are types of wireless communication devices widely used in communication applications.

Communication applications involve a transmission of communication data from one communication entity to another communication entity or a group of communication entities. If information is distributed to a plurality of receivers, all receivers may receive the same stream of data or packets from the same source. So-called multicast or one-two-many transmissions allow bandwidth savings, because at least a large portion of the data is transmitted once from the source through the network to a switching point close to the multiple recipients and only at the switching point individual data streams are generated.

In order to be able to transmit communication data from a source to multiple destinations in a communication network, a path for the data from the source towards the individual destinations must be identified. In a communication network having a plurality of routing nodes, a multicast path for a multicast channel is usually set up to connect the source and the destination via intermediate routing nodes. Usually, a multicast routing protocol identifies suitable routing nodes between the source and the destination for relaying the multicast data.

Many multicast protocols use a so-called reverse path forwarding (RPF) check to construct a reverse short path tree (SPT) based on a unicast routing information base (RIB) to forward data from the source to the destination along a unicast path from the destination to the source. Thus, the path for the multicast channel which is in fact first established from the destination towards the source is used in the reverse direction to transmit data from the source towards the destination.

This approach works well in symmetric routing environments, i.e., environments where the characteristics of the transmission path in one direction are the same as the characteristics of the communication path in the other direction, i.e. reverse direction.

However, in asymmetric routing environment the transmission characteristics of a communication path in one direction differ from the transmission characteristics of the same path in the other direction and consequently a path suitable for a transmission of data in one direction may not be suitable for a transmission of the data in the reverse direction. As an example, a transmission path in a communication network may have a transmission bandwidth or other characteristic in one direction, which is different from the bandwidth or other characteristic in the other direction, an example being a satellite communication link or a broadband/narrow band connection between two communication entities.

If in such a communication network with asymmetric routing characteristics a reverse path-forwarding scheme is used to construct a path and communication channel for the transmission of multicast data from a source to a destination, the obtained path may not be optimal. For example, if a communication path constructed from the destination towards the receiver is used in the reverse direction for the transmission of multicast data, the quality of service (QoS) requirements may not be met for the multicast data transmission, even if the routing from the destination to the source considered the quality of service requirements.

B. Fenner, M. Handley, H. Holbrook, I. Kouvelas, "Protocol Independent Multicast - Sparse", Internet Draft, Internet Engineering Task Force, February 2004 describes a multicast protocol setting multicast routing tables of routing nodes in a communication network. The PIM protocol uses routing information related to a path set-up between a multicast destination and the source for the transmission of multicast data, i.e. a reverse path scheme, for establishing a multicast communication channel. Accordingly, if the PIM protocol is applied to asymmetric routing environments, the quality of service requirements for the multicast channel may not always be met, as noted above.

Horst Hodel, "Policy Tree Multicast Routing: An Extension to Sparse Mode Source Tree Delivery", ACM SIGCOMM Computer Communication Review, Vol. 28(2), April 1998 describes modifications to the PIM protocol for achieving improved multicast routing in asymmetric routing environments by modifying the PIM protocol and consequently substantial efforts to implement this approach in existing communication systems using the PIM protocol are required.

### SUMMARY OF THE INVENTION

It is therefore an object of the invention to improve multicast routings in asymmetric routing environments at reduced implementation requirements.

This object of the invention is solved by a method for setting a multicast routing table with the features of independent claims 1.

Further, the object of the invention is solved by a system for setting a multicast table with the features of claim 15 and a routing node with the features of independent claim 29.

Further features of the invention are disclosed in further claims.

### BRIEF DESCRIPTION OF THE DRAWINGS

- Fig. 1: illustrates operations of a method for setting a multicast table according to an embodiment of the invention;
- Fig. 2: shows operations of a method for setting a multicast routing table according to another embodiment of the invention;
- Fig. 3: shows elements of a system for setting a routing table according to an embodiment of the invention;
- Fig. 4: illustrates a method for setting a multicast routing table according to another embodiment of the invention, particularly illustrating operations for selecting a target routing node;
- Fig. 5: illustrates elements of a communication system for setting a multicast routing table according to another embodiment of the invention, particularly illustrating the transmission of an update message from a target node to a leaf routing node;
- Fig. 6: illustrates operations of a method for setting a multicast routing table according to another embodiment of the invention, particularly illustrating operations for selecting a target routing node in inter and intra domain cases;
- Fig. 7: illustrates elements of a communication system for setting a multicast routing table according to another embodiment of the invention, particularly illustrating inter/intra domain multicast routing;
- Fig. 8: illustrates operations of a method for setting a multicast routing table according to another embodiment of the invention, particularly illustrating selecting a target node using a unicast message;
- Fig. 9: illustrates elements of a communication system for setting a multicast routing table according to another embodiment of the invention, particularly illustrating a selection of a target routing node using a unicast message.

### DETAILED DESCRIPTION OF THE PREFERRED EMBODIMENTS

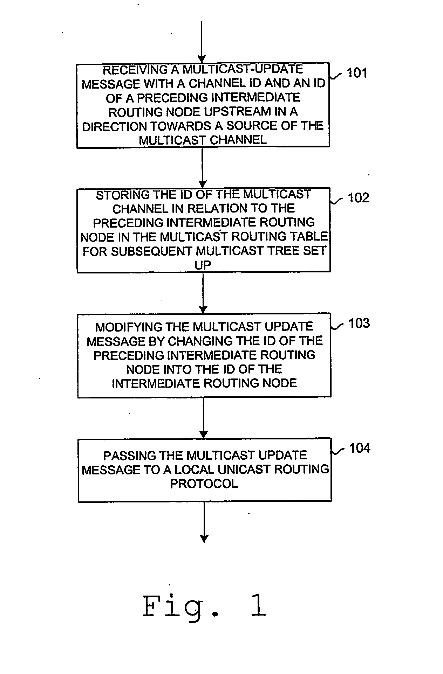

Fig. 1 illustrates operations of a method for setting a multicast routing table according to an embodiment of the invention, particularly outlining operations to store modified identifications pertaining to a multicast channel, in order to improve a path of the multicast channel from a multicast source to multicast destinations.

The method can be used in a multicast routing application in a asymmetric routing environments and environments using a reverse path forwarding check to establish multicast channel by generating a reverse short path tree. The embodiment of Fig. 1 allows an updating of multicast routing tables maintained in association with routing nodes of the communication network, the multicast routing tables being for example generated by a known multicast routing protocol such as the PIM protocol referred to above. The modifications of the multicast routing table at a routing node may be performed in such a manner that a multicast routing protocol implemented in the communication network at an earlier point in time can access the multicast routing table for a multicast tree set-up without modification, i.e. the units or means realizing the functionality of the prior multicast routing protocol do not require changes.

The method is suitable for a multicast communication system comprising a source routing node of a multicast channel, a plurality of intermediate routing nodes carrying the multicast channel and a leaf routing node of the multicast channel having multicast destinations connected to it, wherein the multicast routing tables can be referenced by the plurality of intermediate routing nodes during a multicast routing tree set-up, e.g. as required by a mulitcast routing protocol such as the PIM protocol referred to before.

In a first operation 101, an update message is received at a current intermediate routing node, the update message being intended to trigger updating of a multicast routing table maintained in association with the current intermediate routing node. The update message is received from a preceding routing node upstream from the current routing node in a path towards a source of the multicast channel. The update message includes a channel identification of the multicast channel and an identification of the preceding routing node located upstream in the path towards the source of the multicast channel.

The update message includes the multicast channel identification and an identification of the preceding routing node in the path in direction to the source of the multicast channel in order to enable the current routing node to modify the multicast routing table in such a manner that during a multicast tree set-up by a multicast routing protocol using a reverse path forwarding as outlined above, a more suitable path for the multicast channel from the source node towards the leaf routing node is established.

In a subsequent operation 102 the identification of the multicast channel is stored in the multicast routing table in relation to the preceding routing node, i.e., the routing node that passed on the update message to the current routing node. Accordingly, if a multicast routing protocol now accesses the multicast routing table for establishing a path for the multicast channel using a reverse tracing scheme, the multicast routing protocol will use the identification of the respectively preceding routing node for constructing piecewise the path of the multicast channel, i.e., the multicast routing protocol will use the preceding routing node as node for carrying the multicast channel. Accordingly, by the modification of the multicast routing table at the current node, it is assured that the preceding node will be used e.g. by a protocol using reverse path forwarding, for a multicast channel set-up for transmission of multicast data from the source node to the multicast destinations.

Subsequently, in an operation 103, the update message received from the preceding routing node is modified by changing the identification of the preceding routing node into the identification of the current routing node. In this process the part of the update message containing the identification of the preceding routing node is replaced or overwritten by the identification of the current node.

Thereafter, in an operation 104 the multicast-update message is passed to a unicast routing protocol for further transmission towards the multicast destinations. The unicast routing protocol may be a routing protocol as known in the art, suitable for establishing a path from a source to a destination in a network having multiple routing nodes. Accordingly, the unicast routing protocol will forward the update message to a succeeding intermediate node in a suitable path from the source to the multicast destination, and at the succeeding intermediate node the operations 101-104 can be repeated, consequently leading to another portion of the path of the multicast channel running from the preceding node through the current node towards the succeeding node.

The embodiment described above is particularly advantageous in that the update operations to the multicast routing tables at the routing nodes can be performed by a separate mechanism as described with operations 101-104, separate from other functions realized in the communications system, especially in connection with setting a multicast channel, thus avoiding changes also in connection with regard to a used multicast routing protocol. In other words, the operations 101-104 can be implemented or realized as an overlay to existing functionalities of the system, particularly in connection with a multicast routing protocol, avoiding the need to change the state machine at a particular node. The overlay of operations 101-104 can be implemented for example in an upgrade of an existing communication network for modifying multicast routing tables in such a manner that a more suitable path for multicast data transmission from a source towards a destination can be found. More precisely, the modifications to the multicast routing tables of the intermediate nodes are performed such that a multicast routing protocol using a reverse path forwarding check for constructing a path from the source to the multicast destination uses the unicast path of the update message routed in direction of the multicast destination from the multicast source in a reverse direction. I.e., as at each intermediate node the identification of a preceding node, see operation 102, is stored, a reverse path forwarding mechanism will use the preceding node for constructing a multicast channel from the source towards the multicast destination. The multicast routing table can therefore be formed in accordance with a known multicast routing protocol using reverse path forwarding, the known multicast routing protocol using the multicast routing table to build a multicast routing tree after storing the identification of the multicast channel in relation to the respectively preceding intermediate routing nodes in the multicast routing table, as outlined above.

It thus becomes possible to improve multicast routings in asymmetric routing environments at reduced implementation requirements.

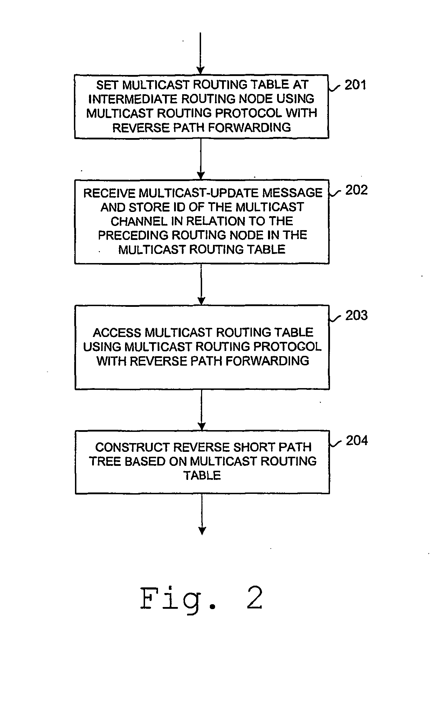

In the following a further embodiment of the invention will be described with regard to Fig. 2.

Fig. 2 illustrates operations of a method for setting a multicast routing table at an intermediate node of a communication system, particularly outlining the interaction between at least some operations of Fig. 1 as an overlay to an existing multicast routing protocol, i.e. a multicast routing protocol implemented in the communication system at an earlier point in time. The operations of Fig. 2 illustrate the steps taken at an individual intermediate node, which may be any intermediate node in the to-be-established path from the source of the multicast channel towards the multicast destinations.

In a first operation 201 the multicast routing table is set at the intermediate routing node using a known multicast routing protocol with a reverse path forwarding scheme for constructing a multicast channel from the source of the multicast data to a leaf routing node of the multicast channel, the leaf routing node being e.g. a node having multicast destinations connected thereto. In an example the multicast routing protocol is the PIM protocol described in B. Fenner, M. Handley, H. Holbrook, I. Kouvelas, "Protocol Independent Multicast-Sparse"., Internet Draft, Internet Engineering Task Force, February 2004. The multicast routing table generated based on the PIM protocol is a routing table which constructs a path for the multicast channel from the multicast source to the multicast destinations based on a reversing of a path established for example based on a transmission of a multicast request from the leaf routing node to the source node of the multicast data. For example, the multicast routing protocol may transmit a multicast request from the leaf routing node to the source of the multicast data using a unicast protocol. The multicast routing protocol can then use the path of the unicast path in a reverse direction for transmitting the multicast data from the source towards the multicast destination. As noted in the introductory section, using the unicast path in a reverse direction may lead to problems in asymmetric routing environments, as the transmission characteristics along the path from the leaf routing node to the source node may substantially differ from the transmission characteristics along the same path in the reverse direction from the source node to the leaf routing node. Accordingly, in order to avoid the disadvantages of the reverse path forwarding in asymmetric environments, changes are made to the multicast routing tables such that a more suitable path for the multicast data from the source to the destinations can be used.

More precisely, in an operation 202 the update message is received at a particular intermediate node, and the identification of the multicast channel is stored in relation to the preceding intermediate routing node in the multicast routing table associated with the intermediate node. This operation substantially corresponds to operation 102 described with regard to Fig. 1. The storing of the ID of the multicast channel in relation to the preceding intermediate node may overwrite existing entries in the multicast routing table or may create a new entry in the multicast routing table.

After completing the storing operations, in an operation 203 the existing multicast routing protocol with a reverse path routing mechanism accesses the multicast routing table according to a procedure as e.g. known in the art, such as a procedure performed in accordance with the PIM protocol.

Thereafter, in an operation 204 the multicast routing protocol with a reverse path routing mechanism constructs a reverse path or short path tree for the multicast channel, e.g. as known in the art in accordance with the PIM protocol.

As the update message preferably is transmitted from the source node in direction towards the leaf routing node along a most suitable path for the multicast channel, the reverse path forwarding mechanism of the known multicast routing protocol will construct a reverse path for the multicast channel exactly following the path of the update message.

While the update message may be transmitted in direction towards the leaf routing node basically using any routing scheme, a most suitable path for the multicast channel can be obtained if the routing protocol for the unicast message establishes a path for the update message which is particularly suitable for transmitting the multicast data from the source node towards the multicast destinations. For example, the routing protocol may decide a path for the update message based on an available bandwidth of respective portions of the path, a transmission delay, robustness of the path, costs for transmission of a particular amount of data and similar. The above characteristics or quality of service (QoS) settings may be selected in accordance with a particular multicast data session. Routing protocols selecting a path between to communication entities in network environments, including under consideration of required path characteristics or QoS settings are known in the art and not further described here. An example for intra-domain routing is described in G.Apostolopoulos, R. Guerin, S. Kamat, A. Orda, T. Przygienda, and D. Williams "QoS Routing Mechanisms and OSPF Extensions", Internet RFC 2676, August 1999. An example for inter-domain routing is described in L. Xiao, K.-S. Lui, J. Wang, and K. Nahrstedt, "/QoS extension to BGP/", 10th IEEE International Conference on Network Protocols, November 2002.

As shown with the embodiment of Fig. 2, existing multicast routing schemes may be employed in cooperation with the invention, without a requirement of a modification to the existing multicast routing protocols. The existing multicast routing protocols may be even unaware of the existence of the overlay scheme described above, and may establish multicast routing channels or path in full compliance with the existing protocol. The overlay described above can only be used for modifying multicast routing tables as established or employed by the existing multicast routing protocol in such a manner that a more suitable data transmission path for the multicast session is used.

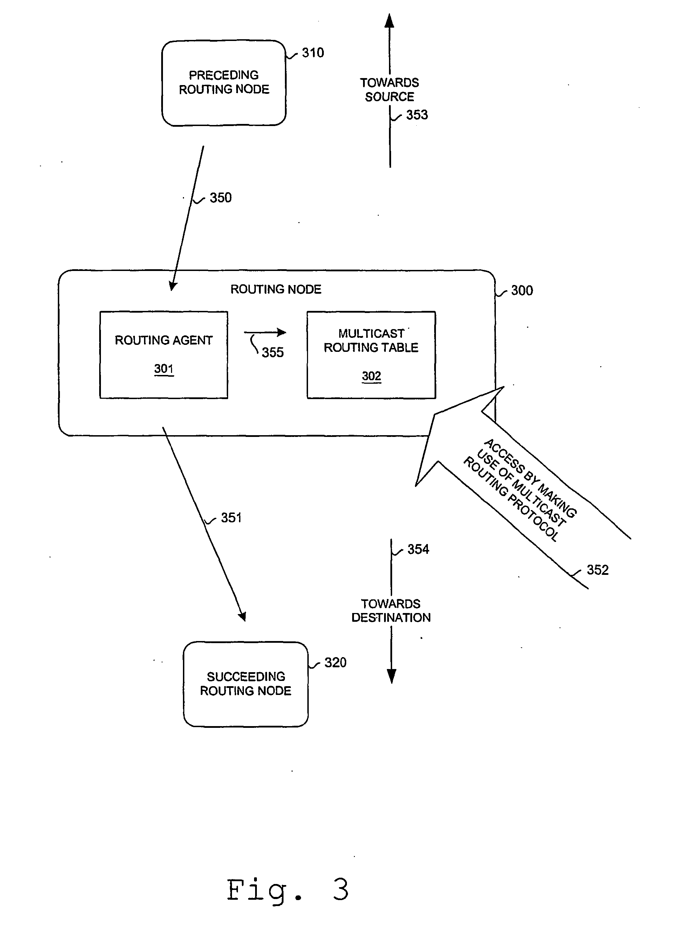

In the following a further embodiment of the invention will be described with regard to Fig. 3.

Fig. 3 illustrates elements of a multicast communication system for setting a multicast routing table being referenced during a multicast tree set-up.

Fig. 3 illustrates only some of the elements of the communication system required for outlining the principals for setting the multicast routing table. More precisely, Fig. 3 illustrates a current intermediate routing node 300 of the communication system, having a routing agent 301 and a multicast routing table 302. Moreover, Fig. 3 illustrates a preceding intermediate routing node 310 in a path for a multicast channel extending from the source of the multicast data to the leaf routing node connecting to the multicast destinations. The preceding intermediate routing node 310 is considered to constitute a preceding node to the intermediate routing node 300, as the preceding routing node is located closer to the source of the multicast data as the intermediate routing node 300, as illustrated by the arrow 353. Still further, Fig. 3 illustrates a succeeding intermediate routing node 320 of the path for the multicast channel from the source of the multicast data towards the leaf routing node connecting to the multicast destinations. The succeeding intermediate routing node 320 is considered to constitute a succeeding node, as it is located further away from the source of the multicast data as compared to the intermediate routing node 300, as illustrated by the arrow 354 indicating the direction towards the destination of the multicast data.

The intermediate routing node 300 may be any node of the communication system having a routing agent realizing the functionality for suitably modifying or updating the multicast routing table of the intermediate routing node 300 in order to effect provision of a more suitable path for the multicast channel from the source to the leaf routing node and ultimately to the multicast destinations. More precisely, the multicast routing agent includes means for receiving an update message from the preceding routing node, comprising an identification of the multicast channel and an identification of the preceding intermediate routing node located upstream along the path towards the source of the multicast channel. Further, the agent includes means for storing the identification of the multicast channel in relation to the preceding intermediate node in the multicast routing table 302, as illustrated by the arrow 355. Still further, the routing agent includes means for modifying the update message by changing the identification of the preceding intermediate node 310 into the indication of the intermediate node 300 and means for passing the modified update message to the succeeding routing node 320. The transmission of the update message from the preceding routing node 310 through the intermediate routing node 300 to the succeeding intermediate routing node 320 and possibly further routing nodes can be effected using a local unicast routing protocol of the communication system, as it was outlined with regard to previous embodiments.

After the modifications of the multicast routing table outlined above on the basis of the update message, a multicast routing protocol of the communication system, such as the PIM protocol, may access the multicast routing table 302 for setting up a multicast routing channel from the source of the multicast data to the destinations of the multicast data, as illustrated by the arrow 352. As noted above, the multicast routing protocol may be unaware of the mechanisms and actions taken by the routing agent in the multicast routing table. Accordingly, the multicast routing table may be formed in advance by the multicast routing protocol, such as the PIM protocol, and the multicast routing protocol may use the multicast routing table to build a multicast routing tree after the actions taken by the routing agent, e.g., storing the identification of the multicast channel in relation to the preceding intermediate routing node 310 in the multicast routing table 302.

As the communication system may comprise routing nodes having a routing agent in accordance with the described embodiment, and routing nodes not having a routing agent as described with the present embodiment, the intermediate routing node 300 may advantageously perform a checking operation, to determine whether the intermediate routing node in fact comprises a routing agent for upsetting the multicast routing table.

Thus, upon receiving the update message from the preceding intermediate routing node, the intermediate routing node 300 may determine, whether a routing agent is present, and in case a routing agent is present, may forward the update message to the routing agent, effecting or instructing the routing agent to perform the above outlined operations to set the multicast routing table 302.

In the following examples of the elements shown in Fig. 3 are outlined in further detail. It is noted that the following details constitute examples only and should not be construed as limiting the application.

The communication system for multicast communications may be any kind of wireless communication network, fixed wireless communication network, and may include wireline connections. For example, the communication system may include any mobile communication network, i.e. networks with mobile terminals and fixed base stations such as UMTS networks, and may also include ad-hoc communication networks. An ad-hoc communication network may be configured as a wireless network with a distributed medium access control, constituting a network with dynamic behaviour and composition, where an availability of resources and for example a coverage area depends on the participating network elements or nodes. The networks may relay on packetized data transfer, or on direct communication links or any kind of connection-less links.

In the present case the communication network is considered to support multicast data transmissions, i.e., a transmission of data from a source to multiple destinations. The multicast transmission generally occurs at the same time for all multicast data destinations, and a multicast channel carrying the multicast data towards a location or node closer to the multicast destinations may be established. Generally, the multicast channel may extend from the source of the multicast data towards a leaf routing node connected to the actual multicast destinations. The leaf routing node can be considered to constitute a switching device, where the commonly transmitted multicast data via the multicast channel is split up into individual data streams or packet sequences for the individual multicast data destinations.

The multicast destinations may generally be any suitable computing devices, such as laptop computers, mobile telephones, personal digital assistants, intermediate nodes of the network, and similar. In the communication system nodes can at the same time constitute multicast data destinations and intermediate nodes for routing communication data pertaining for example to other multicast sessions.

A typical multicast session is the transmission of audio or video data from a source node or server towards a plurality of multicast destinations or viewers. If the source node is for example located in one geographical area and the multicast destinations are located in another geographical area, the multicast data, i.e. the audio data or video data or other data may be transmitted as a single data stream or stream of packets from the source node in the first geographical are to a leaf routing node associated with the second geographical area and branching the multicast data into individual transmissions to the individual destinations in the second geographical area. However, besides video data and audio data, a multicast session may involve a transmission of arbitrary other types of data.

In the following examples of the intermediate routing node 300 are described.

The intermediate routing node may be constituted by a node of the communication system as outlined above, supporting a multicast routing protocol, such as the PIM protocol. The intermediate routing node 300 may therefore be a computing device, a mobile telephone, or any other node of the communication system. Generally, the intermediate routing node 300 will include at least one processing element or CPU, and storage capabilities or memories for storing data and programs for supporting proper operation of the intermediate routing node. The intermediate routing node comprises a storage space for storing the multicast routing table 302 or is connected to a storage space for holding the multicast routing table 302 at a remote location. Further, the intermediate routing node 300 includes the routing agent 301 for receiving the update message and appropriately modifying the multicast routing table, as outlined above. The routing agent may be constituted by sequences of program instructions stored at the intermediate routing node 300 which, when loaded into the central processing unit of the node cause a realization of the above outlined features of the routing agent. Alternatively, hardware elements or circuits may at least partially constitute the routing agent. Accordingly, the intermediate node may store code sections pertaining to the routing agent, including a code section including instructions for effecting receiving an update message comprising an identification of the multicast channel and an identification of the preceding intermediate routing node 310 having an agent and being located upstream along the path towards the source of the multicast channel, a code section having instructions for effecting storing the identification of the multicast channel in relation to the preceding intermediate node in the multicast routing table for subsequent multicast channel set-up, a code section having instructions for effecting modifying the update message by changing the identification of the preceding intermediate node into the indication of the current intermediate node, and a code section having instructions for effecting passing the modified update message to a local unicast routing protocol.

The multicast routing table 302 includes a memory space for storing an identification of a multicast channel and an associated identification of a preceding intermediate node or of the source of the multicast channel. The information of the multicast routing table may be stored in arrays comprising an identification of the multicast channel followed by an identification of the preceding routing node or source of the multicast channel. The identification may be any unique string allowing an identification of the preceding intermediate node or source, such as an IP-address used in Internet applications. Alternatively the identification of the preceding routing node may be constituted by any other kind of information. Similarly, the identification of the multicast channel may be any unique string or any other kind of information allowing an identification of the multicast channel and/or the multicast destinations.

Access by the multicast routing protocol after setting the multicast routing table by the routing agent can be performed in accordance with the features of the multicast routing protocol, i.e., there are no amendments to the procedures executed by the multicast routing protocol. Access can be performed by reading the identification of the multicast channel and the identification of the preceding routing node in a procedure to construct a path for the multicast channel using reverse path forwarding.

As outlined with regard to previous embodiments, the update message is transmitted along the intended path for the multicast channel from the multicast source towards the multicast destinations, and will thus be transmitted from the preceding routing node 310 to the intermediate routing node 300, as illustrated by the arrow 350. The update message may be transmitted using a unicast routing protocol along a suitable path for the multicast channel or may be transmitted along a predefined path, i.e., along a predefined sequence of routing nodes.

According to one example the update message including the identification of the multicast channel and the preceding routing node is transmitted using a known addressing scheme, such as in Internet packet transmission and the update message is constituted by or included in a data packet having a header portion indicating the address or identification of the intermediate routing node 300.

The intermediate routing node, after the routing agent did update the multicast routing table and modify the update message, as outlined before, may use the same scheme for forwarding the update message to the succeeding routing node 320, as illustrated by the arrow 351.

The preceding routing node 310 and the succeeding routing node 320 substantially have the same configuration as the intermediate routing node 300, i.e. will also be provided with a routing agent and a multicast routing table. Even though not illustrated in the figure, further routing nodes or relay stations may be provided between the preceding routing node 310, the intermediate routing node 300 and the succeeding routing node 320, these nodes or relay stations not being provided with a routing agent.

A transmission of the update message maybe performed using any kind of network data transmission, such as a wireless data transmission, a wireline data transmission or combinations thereof.

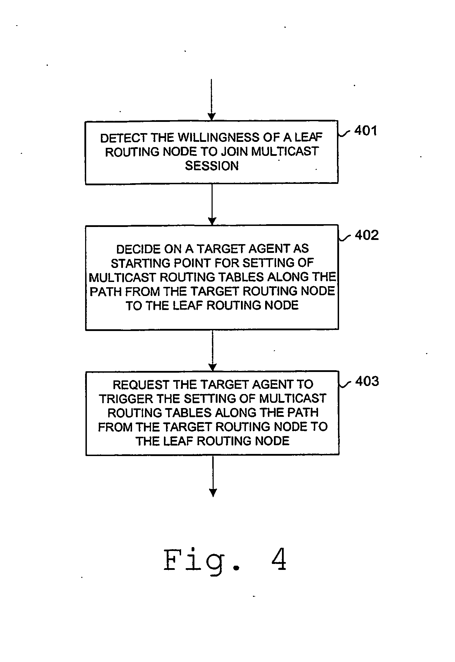

In the following a further embodiment of the invention will be described with regard to Fig. 4.

Fig. 4 illustrates operations of a method for setting a multicast routing table, particularly outlining operations for selecting a target routing node as a starting point for the update message.

As noted above, the update message is transmitted along a path from the source node to the leaf routing node, the path being determined based on the multicast routing tables of the individual routing nodes. While it is possible to transmit the update message along the entire path from the source node to the leaf routing node, it is also possible to transmit the update message only along a certain portion of the path from the source node to the leaf routing node. More precisely, the update message can be transmitted from or start at a certain target routing node selected from amongst the routing nodes between the source node and the leaf routing node.

More precisely, in an operation 401 it is detected whether a leaf routing node wishes to join a multicast session. For example, if a user of a computing device connected to the leaf routing node subscribes to a particular service, such as a video transmission, the leaf routing node may indicate in the network its willingness to join a multicast session for obtaining the desired information and transmitting the information to the user.

Thereafter, in an operation 402 a decision on a target routing node is reached, the target routing node being selected as a starting point for setting the multicast routing tables along the path from the target routing node to the leaf routing node. In an example the decision on a target routing node is based on a policy, e.g. a policy set by a network operator. For example, according to the policy a target routing node close to the source of the multicast channel is selected, or a target routing node at some other point along a path for the multicast channel. The operations for deciding on a target routing node may be carried out at the leaf routing node, or at any other node of the network being responsible for the multicast channel or session. If a target routing node in between the source node and the leaf routing node is selected, only the portion of the path for the communication channel between the target routing node and the leaf routing node will be set in accordance with the features and operations described with regard to the previous embodiments.

After selecting the target routing node, in an operation 403 the target routing node is requested to trigger the setting of the multicast routing tables along the path for the multicast channel from the target routing node to the leaf routing node. The target routing node maybe requested by the leaf routing node or by any other node responsible for the multicast channel or session. According to an example, the leaf routing node transmits the request message to the target routing node, requesting a target update agent associated with the target routing node to trigger the setting of the multicast routing tables from the target routing node to the leaf routing node. The request message may for example include an identification of the multicast channel, and of the leaf routing node. Further, the request message may include certain requirements or desired characteristics for the multicast channel, such as quality of service settings. For example, the request message may include a certain required data throughput, a certain maximum allowable time delay, or any other quality of characteristic of the desired data transmission.

Based on the request message the target routing node generates the update message as described with regard to previous embodiments and transmits the update message towards the leaf routing node along a path suitable for the communication channel. For example, the update message is transmitted along a path selected by a unicast routing protocol, such as any Internet routing protocol, or similar. Further, a quality of service aware routing protocol may be used, in case certain characteristics for the multicast channel are required, as for example transmitted with the multicast request message. Routing protocols suitable for routing the update message, including QoS where routing protocols are known in the art, and not further described at this point.

After the update message arrives at the leaf routing node, the multicast routing protocol may construct a path for the multicast channel based on reverse path forwarding checks, this path coinciding with the path taken by the update message, as the multicast routing protocol follows the multicast routing table information at each intermediate routing node, leading the multicast routing protocol towards the target routing node.

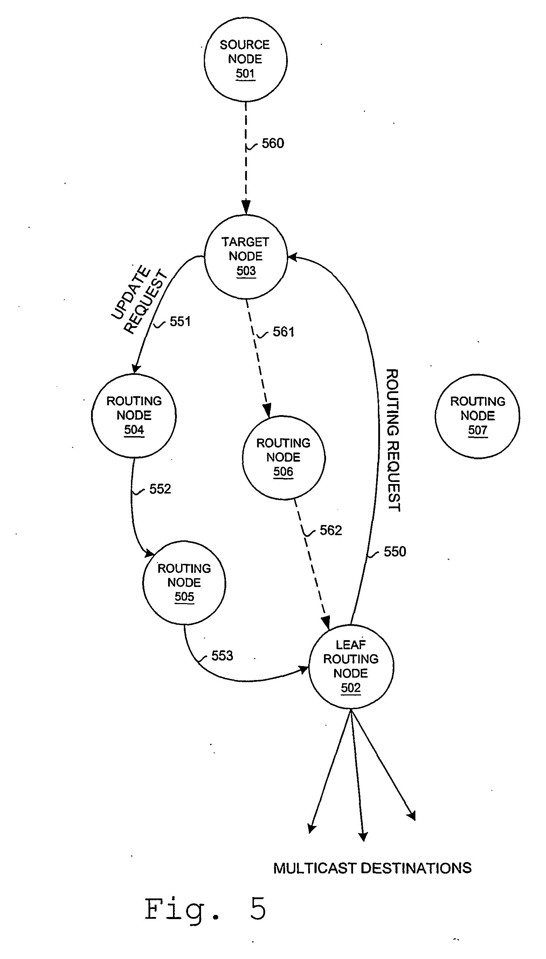

In the following a further embodiment of the invention will be described with regard to Fig. 5.

Fig. 5 illustrates elements of a communication system for setting multicast routing tables, further outlining a selection of a target routing node and the transmission of a request message and an update message.

Fig. 5 schematically illustrates a source node 501 of multicast data and a leaf routing node 502 as a recipient of the multicast data.

As noted earlier, multicast destinations (not shown) may be connected to the leaf routing node, so that the leaf routing node acts as a switching node for routing the multicast data, separating the data stream into the individual branches towards the individual multicast destination. However, the leaf routing node may itself constitute the destination of the multicast data, e.g. as a computing device having requested the multicast data. If the leaf routing node constitutes a routing node somewhere in the path of the multicast channel from the source towards the destination, the multicast channel continues from the leaf routing node 502 to further routing nodes. Combined approaches are possible, where the leaf routing node 502 acts as a recipient of the multicast data, as a branch in point for the multicast data to multicast destinations and as a routing node for forwarding the data of the multicast channel to a further routing node.

Fig. 5 further illustrates a target routing node 503, constituted by a routing node of the communication system selected by a mechanism as a starting point for the setting of multicast routing tables along the path from the target routing node to the leaf routing node. The target routing node 503 may be located at any point in the communication system in a path from the source node 501 to the leaf routing node 502. In order to be able to properly route the multicast data, however, it is an advantage, if the target routing node lies in an existing path or portion of the path of the multicast channel from the source node 501 to the leaf routing node 502, or that the target routing node at least maintains information or is provided with information in the selection process enabling the support of the multicast channel and the multicast data transmission from the source node 501 to the leaf routing node 502.

For example, a multicast routing protocol established a path for the communication channel from the source node 501 to the leaf routing node 502 and it is desired to improve this path in view of a characteristic of the path for a transmission of a data from the source node to the leaf routing node. In this case, one of the routing nodes along the existing path from the source node 501 to the leaf routing node 502 is selected as target routing node for setting or updating the multicast routing tables as outlined with regard to the previous embodiments. The before outlined procedure also works for newly establishing a path for the multicast channel, in which case for example a routing node close to the source node or the source node itself can be selected as target routing node.

Fig. 5 shows a number of routing nodes 504, 505, 506 and 507 of the communication system, constituting exemplary candidates for routing the communication channel from the source 501 to the leaf routing node 502.

In the present embodiment it is assumed that a communication path for the communication channel was previously established by a multicast routing protocol, such as the PIM protocol, along the path from the source node 501 through the target routing node 503, the routing node 506 to the leaf routing node 502, as illustrated by the dashed lines 560, 561 and 562. This path, however, may not be optimal, if the path was established by a routing protocol with reverse path forwarding, such as the PIM protocol, for reasons as outlined above.

Therefore, upon detecting the willingness of the leaf routing node 502 to join a multicast session, e.g. based on a request from a user with a computing device connected to the leaf routing node 502, the leaf routing node selects the target node 503 as a target or starting point for updating the multicast routing tables to obtain a more suitable path for the multicast channel under consideration of the characteristics of the path in the direction of the transmission. Upon selecting the target node 503 the leaf routing node 502 transmits a request message to the target routing node 503, as illustrated by the arrow 550. The transmission of the request message may be performed using any suitable technique, such as a data packet having a suitable address portion, as available in communication networks, and the request message may be forwarded through a number of further routing nodes, such as the routing node 506.

Upon receiving the request message at the target node 503, the target node generates a multicast-update message as outlined before. The target node 503 then transmits the update message to the routing node 504, the update message including the identification of the multicast channel and an identification of the target routing node 503.

The path for the update message may be selected by any suitable technique, such as a local unicast routing protocol available in the communication system. Preferably, a routing protocol is used which is QoS aware, i.e., which is able to find a path for the update message having certain characteristics, such as bandwidth, delay, etc.

Upon receiving the update message at the routing node 504 the mechanism for setting the multicast routing table at the routing node 504 is executed, as outlined with regard to previous embodiments. In process the multicast routing table at the routing node 504 is set by storing the identification of the multicast channel in relation to the identification of the target routing node 503. Further, the routing node 504 modifies the update message by replacing the identification of the target node 503 by the identification of the routing node 504 and forwards the update message to the routing node 505.

At the routing node 505 the same process is repeated, i.e., the identification of the multicast channel is stored in the multicast routing table of the routing node 505 in association with the identification of the routing node 504, and the update message is modified by including the identification of the routing node 505 instead of the identification of the routing node 504.

In the present example the update message is then forwarded to the leaf routing node, however, it is possible that the update message is transmitted through further routing nodes such as nodes 504 and 505.

At the leaf routing node 502 the multicast routing table is also set, by storing the identification of the multicast channel in relation to the identification of the routing node 505.

If after this operations a multicast routing protocol now performs a reverse path forwarding check for establishing a path for the communication channel starting at the leaf routing node, the leaf routing node will use the identification of the routing node 505 for establishing a portion of the path for the multicast channel, the routing node 505 will use the identification of the routing node 504, and the routing node 504 will use the identification of the target routing node 503. This path is then used in the reverse direction for forwarding multicast data, and the final path for the multicast channel runs from the source routing node 501 through the target node 503, the intermediate routing node 504 and the intermediate routing node 505 to the leaf routing node 502.

The above steps for selecting a target routing node and setting or updating the multicast routing tables may be performed periodically, particularly in case the communication system has a dynamic behaviour with routing nodes entering and leaving the system, based on a timer, or based on a certain event such as a change in the nodes in the path of the multicast channel.

In an example, each of the nodes shown in Fig. 5 comprises an update agent for performing the update operations of the multicast routing tables as outlined with regard to previous embodiments. In this case, the request message transmitted to the target node 503 is forwarded to an associated update agent of the target routing node for further handling, and the update message transmitted towards the leaf routing node 502 from the target routing node 503 is forwarded at the routing node 504 to an associated update agent for performing the above outlined update operations und similarly to an update agent of the routing node 505 for performing the update operations of the multicast routing table at the routing node 505. The same applies to the leaf routing node 502.

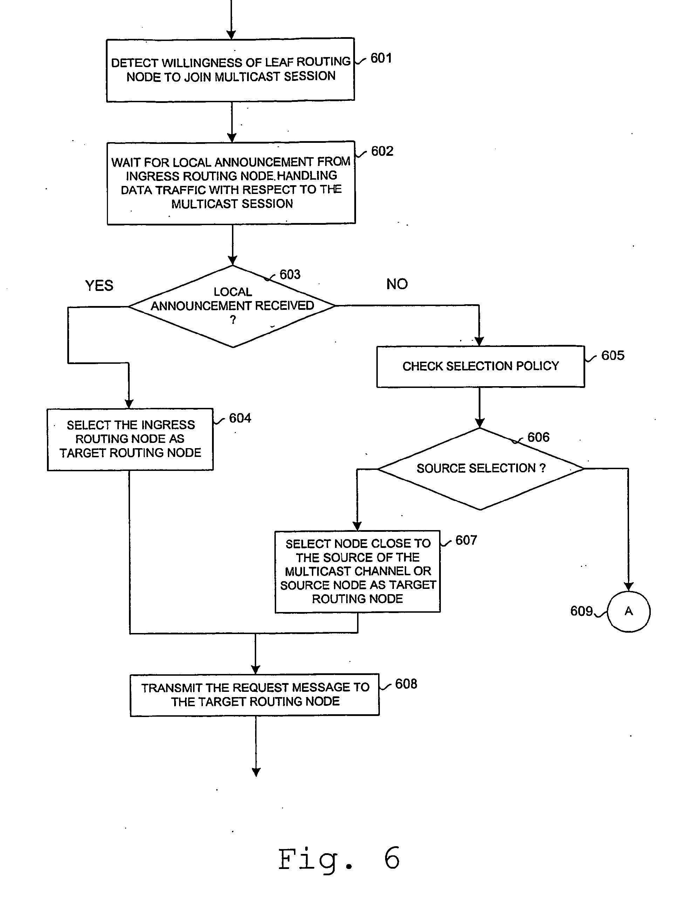

In the following a further embodiment of the invention will be described with regard to Fig. 6.

Fig. 6 illustrates operations for setting of multicast tables for a multicast channel, particularly outlining operations for selecting a target routing node as a starting point for the setting of multicast routing tables towards the destination of the multicast data.

The operations of Fig. 6 may be performed periodically, e.g. with a same repetition rate as a multicast routing protocol performs multicast routing operations, which may be 30 seconds or any other duration. Further, the operations of Fig. 6 may be performed, if modifications to an existing path for the multicast channel are detected, e.g., if in a dynamic system a routing node leaves the communication system.

Fig. 6 particularly outlines a proper selection of a target routing node in inter-domain and intra-domain environments, in order to support a routing of a multicast channel within a domain (intra-domain) and between multiple domains (inter-domain). In a first operation 601 the willingness of a leaf routing node to join a multicast session is detected, substantially as outlined before.

Thereafter, in an operation 602 the leaf routing node waits for a local announcement from an ingress routing node handling data traffic with respect to the multicast session. The ingress routing node is a routing node of a network domain also comprising the leaf routing node. A network domain may be any autonomous network or a group of routing nodes in a particular geographical area. The communication system may comprise multiple such domains interconnected to one another through egress routing nodes and ingress routing nodes. An egress routing node transmits traffic from one network domain to an ingress routing node of another network domain.

Therefore, an ingress routing node of a network domain, upon receiving traffic pertaining to a multicast session, may generate a local announcement for the network domain of the ingress routing node, indicating that this particular node receiving the data pertaining to the multicast session is the ingress routing node for the multicast session. The announcement is broadcast within the domain of the ingress routing node, in this particular example also comprising the leaf routing node.

According to an example the local announcement comprises an identification of the ingress routing node, such as a network address, and an identification of the multicast channel. Accordingly, if the leaf routing node receives the local announcement pertaining to the multicast session, or has received such an announcement pertaining to the multicast session in the past, the leaf routing node knows that the ingress routing node maintains information pertaining to the multicast channel.

Therefore, in an operation 603 it is decided whether the edge routing node received the local announcement. If the decision is "YES", indicating that the local announcement was received at the leaf routing node, the leaf routing node selects in an operation 604 the ingress routing node as target routing node. With the selection of the ingress routing node as target routing node the ingress routing node will be the starting point for setting or updating the multicast routing tables from the ingress routing node towards the leaf routing node. In an operation 608 the leaf routing node then transmits the request message to the target routing node, in this case the ingress routing node.

If in operation 603 the decision is "NO", i.e., a local announcement was not received at the leaf routing node, in an operation 605 a selection policy setting is checked. The selection policy governs the selection of a routing node as target routing node and may be set by an operator of the communication system or the domain of the leaf routing node. According to one option the selection policy may prescribe a source selection mechanism for selecting a routing node close to the source of the multicast routing channel as a starting point for setting the multicast-update tables. Alternatively, the selection policy prescribes a selection of a closest routing node maintaining information with regard to the multicast channel.

In an operation 606 the policy setting is checked, and if a source selection is set, in an operation 607 a node close to the source of the multicast channel is selected as target routing node. This routing node may be a first node connected to the source of the multicast data or, in an alternative, the source node of the multicast data may itself be selected as target routing node. With the node close to the source or the source node being selected as target routing node in operation 607, in operation 608 the request message is transmitted to this node as target routing node.

Operation 608 is followed by the generation and transmission of the update message towards the leaf routing node, as it was outlined with regard to previous embodiments.

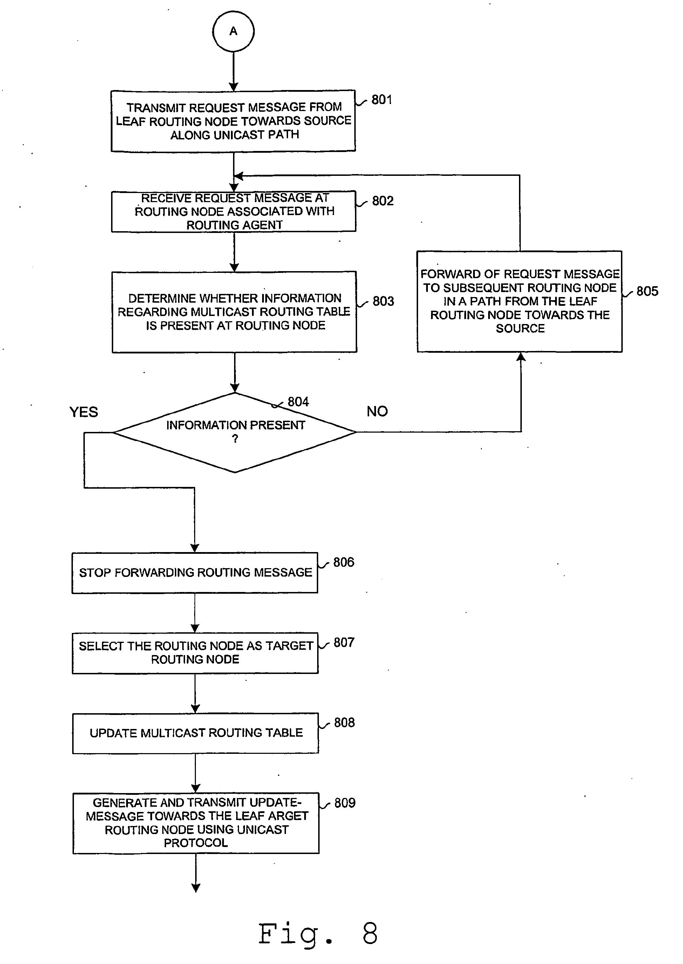

If in operation 606 the decision is "NO", indicating that the source section is not desired, the selection policy prescribes a selection of a closest routing node maintaining information with regard to the multicast channel and the flow of operations continues to an exit point 609, to be further described with regard to Fig. 8.

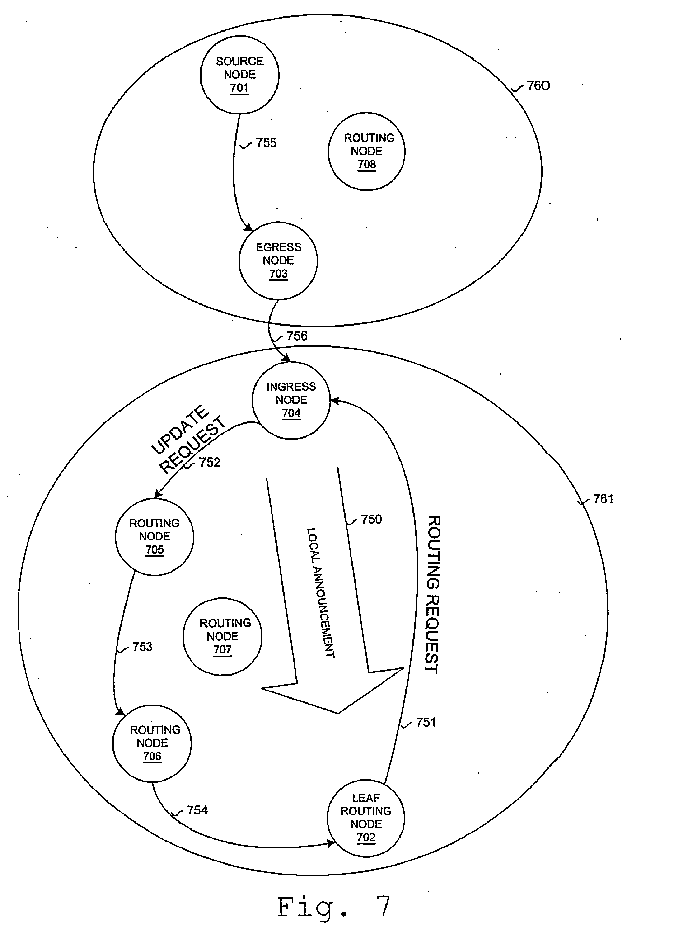

In the following a further embodiment of the invention will be described with regard to Fig. 7.

Fig. 7 illustrates elements of a communication system for setting a multicast routing table, particularly illustrating an inter-domain and intra-domain scenarios for updating the multicast routing tables. As noted earlier, a request message may be transmitted from one domain to another domain of the communication system for routing the multicast channel through a plurality of domains. The present case describes a scenario, where the request message is used to update multicast routing tables for a multicast channel within a particular domain of the leaf routing node.

Fig. 7 illustrates a source node 701 and a leaf routing node 702, as outlined with regard to previous embodiments.

The source node 701 is considered to be located within a first domain 760, and the leaf routing node 702 is considered to be located within a second domain 761. A network domain of the communication system may be considered to be constituted by a geographical area containing routing nodes having knowledge about one another, thus constituting a group of routing nodes for exchange of data between one another. If data are to be transmitted from one domain to another domain, such as from the first domain 760 to the second domain 761, the data will generally be handled by an egress routing node of the first domain, transmitting the data to an ingress node of the second domain, in the example of Fig. 7 the egress node 703 of the first domain 760 to the ingress node 704 of the second domain 761.

While it is possible that traffic between two network domains is handled by a single pair of egress node and ingress node, it is also possible that multiple egress nodes and ingress nodes of the first and second domain handle communication traffic, e.g. pertaining to different communication channels or multicast communication channels.

In the example of Fig. 7, a portion of the communication path for the multicast channel is considered to be established from the source node 701 to the egress node 703 of the first network domain 760, e.g. via a number of intermediate routing nodes such as the routing node 708 shown in Fig. 1. After leading to the egress node, as illustrated by an arrow 755, the multicast channel is passed to the ingress node 704 of the second network domain 761, as illustrated by the arrow 756.

In the second network domain 761 it is considered to be necessary to perform an update or a setting of the multicast routing tables pertaining to the multicast channel, e.g. due to changes of the locations of routing nodes in the second domain, or based on a periodic update mechanism.

The ingress node 704, being the entry point of the multicast channel in the second domain once or periodically transmits a local announcement, as illustrated by the arrow 750, to the nodes of the second domain, the local announcement indicating that the ingress node is the ingress point for the communication channel. For example, the local announcement may comprise an identification of the multicast channel and an identification of the ingress node, such as a network address. The local announcement will be received by the nodes of the second network domain, including the leaf routing nodes 702, and, if the leaf routing node wishes to join the multicast session, e.g. based on a user request, the leaf routing node 702 or any other entity of the communication system may select the ingress routing node 704 as target routing node for starting a setting of the multicast routing tables towards the leaf routing node.

Consequently, the leaf routing node 702 transmits the request message to the ingress routing node 704, as illustrated by the arrow 751, as outlined with regard to the previous embodiment. Following thereto, the ingress routing node generates the update message and transmits the update message via a path towards the leaf routing node 702, as indicated by the arrows 752, 753 and 754. Fig. 7 shows a further example routing node 707, not being part of the multicast path for exemplifying the remaining nodes of the second domain. The routing nodes 705, 706 and the leaf routing node 702 will perform the updates of the multicast routing tables, so that a multicast routing protocol, such as the PIM protocol, using reverse path forwarding checks, will establish a path from the ingress routing node to the leaf routing node via the routing nodes 705 and 706.

If for example the leaf routing node 702 did not receive a local announcement from the ingress node 704, the leaf routing node is unaware of the entry point of the multicast channel into the second network domain. Accordingly, the leaf routing node cannot send the request message to the ingress routing node 704, but may instead decide to transmit the request message directly to the source routing node 701 or to a node in close proximity to the source routing node. As the identity of the source routing node is known to the leaf routing node, e.g. based on the request by a client to join a multicast session, the leaf routing node can transmit the request message directly to the source or a routing node in close proximity thereof.

After selecting the target routing node in this inter-domain scenario, the generation and transmission of the update message follows the substantially same procedure as outlined before, i.e., the target routing node generates an update message and transmits same towards the leaf routing node for effecting the update operations at the individual routing nodes along the path of the update message.

In the following a further embodiment of the invention will be described with regard to Fig. 8.

Fig. 8 illustrates operations of a method for setting multicast routing tables, particularly outlining operations for identifying a target routing node for triggering the setting of multicast routing tables along the path from the target routing node towards the destination, e.g. the leaf routing node.

As noted before, the target routing node may be an ingress routing node of a network domain, i.e., an entry point of the multicast channel into the domain including the leaf routing node or destination of the multicast channel. According to another example, in an inter-domain scenario, a routing node close to the source node or the source node itself may be selected as target routing node.

However, in case a leaf routing node or destination newly wishes to join a multicast session, with an existing multicast channel, it may be desirable to only establish the multicast channel between the new multicast destination and a closest routing node handling data with regard to the multicast session, as outlined in the following.

In a first operation 801 the leaf routing node transmits a request message towards the source of the multicast data. As described earlier, the request message may be transmitted by the leaf routing node upon detecting a request to join the multicast session, such as from a user of a computing device connected to the leaf routing node.

The path for the request message may be selected according to a routing mechanism of the communication system, such as a unicast routing protocol used in Internet applications, as known in the art. The routing protocol selects a path from the leaf routing node towards the source node, this path traversing a number of intermediate routing nodes forwarding the request message on its way to its destination.

In this process, in an operation 802, the request message is received at an intermediate routing node associated with an agent, as outlined with regard to previous embodiments. The request message is transmitted with an identifier, allowing each node along its path to analyse the request message, such as an IP alert function. Based on analysing the message, a routing node may be instructed to determine whether an agent is associated with the routing node, and in case no agent is associated with the routing node, the request message may be forwarded without further processing.

However, if the request message is received at a routing node associated with an agent, the request message may be passed on to this agent, which, in an operation 803 determines whether information regarding the multicast routing table in association with the multicast session in question is present at the routing node. Operation 803 may involve the agent detecting presence of an identifier of the multicast channel in a storage space reserved for multicast routing tables.

It may further be detected, whether the information regarding the multicast routing table of the multicast session is up to date, i.e., whether the routing node in question maintains valid information regarding the multicast channel and is able to provide the multicast data pertaining to the multicast session.

In an operation 804 it is then judged, whether the required information regarding the multicast session is present, and if in operation 804 the decision is "NO", i.e., the required information is not present, the request message is forwarded in an operation 805 to a subsequent routing node in the path from the leaf routing node towards the source routing node. As noted before, the forwarding of the request message may be handled by any routing protocol as known in the art.

After receiving the request message at the subsequent routing node, operations 802 - 804 are repeated, i.e., it is now determined at the subsequent routing node, whether information pertaining to the multicast session in question is present.

This process will be repeated until the request message passes a routing node having the required information regarding the multicast session, this in the worst case being the source node.

Thus, if in operation 804 the decision is "Yes", i.e., if it is determined at the current routing node that information pertaining to the multicast session is present and the routing node is able to provide the data associated with the multicast session, the forwarding of the routing message is stopped in an operation 806. For example, the routing message may include an instruction for discarding the routing message upon determining the required information pertaining to the multicast session. Alternatively, the agent associated with the routing node may provide for such functionality, i.e., discarding the routing message upon determining the required information pertaining to the multicast session.

Thereafter, in operation 807, the routing node having the required information is selected as target routing node and, in operation 808, initiates an updating of the multicast routing tables.

In an operation 809 the routing node then generates and transmits the update message towards the leaf routing node, e.g. using a local existing unicast routing protocol, as it was outlined with regard to previous embodiments.

Using the above procedure, a closest routing node in a path from the leaf routing node towards the source node may be selected having information with regard to the multicast session, which should be joined, and an update of the multicast routing tables starting from the thus selected target routing node towards the leaf routing node may take place.

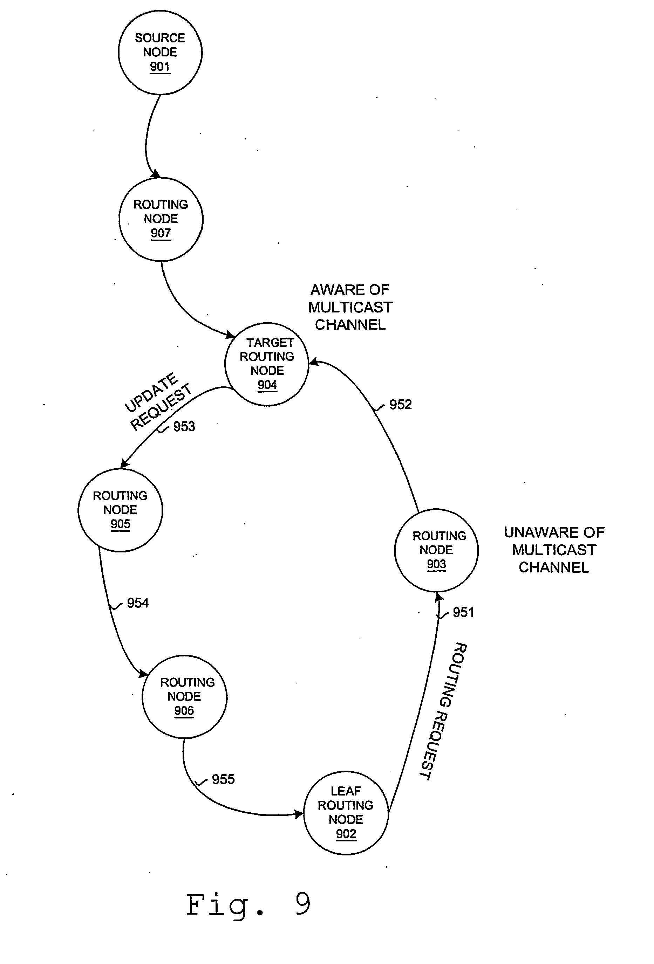

In the following a further embodiment of the invention will be described with regard to Fig. 9.

Fig. 9 illustrates elements of a communication system for setting multicast routing tables, particularly outlining the flow of messages for selecting a target routing node based on the procedure disclosed with regard to Fig. 8.

Fig. 9 illustrates a source routing node 901, being a source of multicast data pertaining to a multicast session. The source node may be the origin of the multicast data, or may be connected to a data source of the multicast session. Fig. 9 further illustrates a leaf routing node 902, being a destination of the multicast data and having for example the functionality to branch the multicast data into individual data streams directed towards individual computing devices. Further, Fig. 9 illustrates intermediate routing nodes 903, 904, 905, 906 and 907 of the communication system, however, it is understood that an arbitrary number of further routing nodes may be present.

As noted before with regard to Fig. 8, the leaf routing node wishes to join the multicast session and generates a request message to be transmitted along a path towards the source node 901. In the present example it is assumed that the request message, as illustrated by the arrow 951, is transmitted by the used routing protocol to the intermediate routing node 903. As the request message is preferably transmitted with for example an IP alert option, the routing node 903 is entitled to analyse the message, and determines whether an agent is associated with the routing node, and it is for example determined by the agent associated with the routing node, whether multicast routing information pertaining to the multicast session in question is present. In this example it is assumed that the routing node 903 does not maintain information pertaining to the multicast session and is unable to provide the required multicast data.

Therefore, the intermediate routing note 903 forwards the request message to a further intermediate routing node 904 along the path towards the source selected by the used routing protocol. The intermediate routing node 904 analyses the request message and, in the present example, it is assumed that the intermediate routing node 904 already maintains information pertaining to the multicast session, i.e., is able to provide the required multicast data.

Therefore, the intermediate routing node 904 is selected as target routing node and generates a multicast-update request for triggering the setting of multicast routing tables in the path from the target routing node 904 towards the leaf routing node 902. The multicast-update request is transmitted to the intermediate routing node 905, as illustrated by the arrow 953, and the multicast routing table update operations are performed, as described with regard to the previous embodiments.

The intermediate routing node 905 forwards the multicast-update request to the further routing nodes towards the leaf routing node, on the path selected by the used routing protocol for transmitting the update request to the leaf routing node, in the present example further passing the routing node 906, where the necessary update operations of the multicast routing table are performed. The multicast request message is then transmitted to the leaf routing node 902, as illustrated at 955, the leaf routing node also performing the required update operations as outlined before.

Accordingly, a multicast routing protocol using reverse path forwarding checks starting from the leaf routing node will select a path for the multicast channel starting at the target routing node, running through the routing node 905, the routing node 906 towards the leaf routing node 902. The remaining portion of the multicast channel is considered to be already established, i.e., from the source routing node through the intermediate routing node 907 to the target routing node 904.

According to yet another embodiment, a multicast communication system for setting a multicast routing table being referenced during multicast tree set up is provided, having processing means and memory means for storing and executing program sections, such as at routing nodes or other control entities of the communication system. The program sections include a code section for realizing the functionality of the update agent as outlined above, including: a code section having instructions to receive an update message comprising an identification of the multicast channel and an identification of a preceding intermediate routing node having an agent and being located upstream along a path towards a source of the multicast channel; a code section having instructions to store the identification of the multicast channel in relation to the preceding intermediate node in the multicast routing table for subsequent multicast tree set up; a code section having instructions to modify the update message by changing the identification of the preceding intermediate node into the indication of the current intermediate node; and a code section having instructions to pass the modified update message to a unicast routing protocol.

Further, program sections can be provided for realizing the functionality of a multicast routing protocol, including a code section having instructions to form the multicast routing table and a code section to use the multicast routing table to build a multicast routing tree after storage of the identification of the multicast channel in relation to the preceding intermediate routing node in the multicast routing table.

Further, a code section may be provided having instructions to effect a transmission of the update message from a target routing node in the path from the source routing node towards the leaf routing node through the intermediate routing nodes using the unicast routing protocol.

Further, a code section may be provided having instructions to determine at an intermediate routing node in the path from the source routing node to the leaf routing node whether the intermediate routing node is operated in association with an update agent, and to pass the update message to the update agent.

Further, a code section may be provided having instructions to determine the willingness of the leaf routing node to join a multicast session.

Further, a code section may be provided having instructions to determine select a target routing node as starting point for setting of multicast routing tables along the path from the target routing node to the leaf routing node.

Further, a code section may be provided having instructions to determine send a request message to the target routing node from the edge routing node, requesting a target update agent associated with the target routing node to trigger the setting of multicast routing tables along the path from the target routing node to the leaf routing node.

Further, a code section may be provided having instructions to select as target routing node an ingress routing node of a network domain including the leaf routing node, the ingress routing node handling data traffic with respect to the multicast session on entering the network domain.

Further, a code section may be provided having instructions to receive at the leaf routing node a local announcement from the ingress routing node handling data traffic with respect to the multicast session and for selecting the ingress routing node as target routing node based on the local announcement.

Further, a code section may be provided having instructions to transmit the request message along a unicast path from the leaf routing node towards the source of the multicast channel, a code section having instructions to receive the request message at an intermediate routing node, analyse the request message to identify whether the intermediate routing node already maintains information pertaining to the multicast channel and a code section having instructions to set the routing node as target routing node, if the intermediate routing node already maintains information pertaining to the multicast channel.

Still further, a computer readable medium may be provided, in which the above code sections are embodied so as to make data processing devices execute the associated functionality. A computer program product may comprise the computer readable medium.

According to another example a multicast communication system for setting a multicast routing table being referenced during multicast tree set up comprises a source routing node of a multicast channel; a leaf routing node of the multicast channel having multicast destinations connected to it; a plurality of intermediate routing nodes carrying the multicast channel and, including: at least one of the plurality of intermediate routing nodes including a multicast routing table and an update agent, the update agent including: means for receiving an update message comprising an identification of the multicast channel and an identification of a preceding intermediate routing node having an agent and being located upstream along a path towards a source of the multicast channel; means for storing the identification of the multicast channel in relation to the preceding intermediate node in the multicast routing table for subsequent multicast tree set up; means for modifying the update message by changing the identification of the preceding intermediate node into the indication of the current intermediate node; and means for passing the modified update message to a local unicast routing protocol.

In the multicast communication system the multicast routing table may be formed in accordance with a multicast routing protocol and wherein the multicast routing protocol uses the multicast routing table to build a multicast routing tree after storing the identification of the multicast channel in relation to the preceding intermediate routing node in the multicast routing table.

In the multicast communication system transmission of the update message from a target routing node in the path from the source routing node towards the leaf routing node through the intermediate routing nodes using the unicast routing protocol may be effected.

The multicast communication system may include means for determining at an intermediate routing node in the path from the source routing node to the leaf routing node whether the intermediate routing node is operated in association with an update agent, and passing the update message to the update agent.

The multicast communication system may include means for detecting the willingness of the leaf routing node to join a multicast session.

The multicast communication system may include means for selecting a target routing node as starting point for setting of multicast routing tables along the path from the target routing node to the leaf routing node.

The multicast communication system may include means for sending a request message to the target routing node from the edge routing node, means for requesting a target update agent associated with the target routing node to trigger the setting of multicast routing tables along the path from the target routing node to the leaf routing node.

The multicast communication system may include means for selecting as target routing node an ingress routing node of a network domain including the leaf routing node, the ingress routing node handling data traffic with respect to the multicast session on entering the network domain.

The multicast communication system may include means for receiving at the leaf routing node a local announcement from the ingress routing node handling data traffic with respect to the multicast session and for selecting the ingress routing node as target routing node based on the local announcement.

The multicast communication system may include means to send the request message across a plurality of network domains.

In the multicast communication system the target routing node may be the routing node nearest to the source of the multicast channel.

In the multicast communication system the target routing node may be a first intermediate routing node routing the multicast channel, along the path of the multicast channel from the leaf routing node towards the source routing node.

The multicast communication system may include means for transmitting the request message along a unicast path from the leaf routing node towards the source of the multicast channel, means for receiving the request message at an intermediate routing node, means for analysing the request message to identify whether the intermediate routing node already maintains information pertaining to the multicast channel and, means for setting the routing node as target routing node, if the intermediate routing node already maintains information pertaining to the multicast channel.

The request message may be sent upstream to the target routing node along a unicast path.

## Claims

1. Method for updating in an overlay to an existing multicast routing protocol a multicast routing table in a multicast communication system comprising a source routing node of a multicast channel, a plurality of intermediate routing nodes carrying the multicast channel and a leaf routing node of the multicast channel having multicast destinations connected to it, the multicast routing table being referenced by at least one of the plurality of intermediate routing nodes during multicast tree set up, comprising the steps:
receiving at an update agent associated with current one of the plurality of intermediate routing nodes an update message originating from a source node, comprising an identification of the multicast channel and an identification of a preceding intermediate routing node having an agent and being located upstream along a path towards the source of the multicast channel;
storing the identification of the multicast channel in association with the preceding intermediate node in the multicast routing table for subsequent multicast tree set up, wherein the multicast routing table is formed by the multicast routing protocol using a reverse path forwarding for constructing a path from the source routing node to the leaf routing node;
modifying the update message by changing the identification of the preceding intermediate node into the identification of the current intermediate node; passing the modified update message to a local unicast routing protocol for further transmission towards the leaf routing node so that the multicast routing protocol uses the unicast path of the update message routed in direction from the source routing node to the leaf routing node for the reverse path forwarding.

2. Method according to claim 1, wherein the multicast routing table is formed in accordance with a multicast routing protocol and wherein the multicast routing protocol uses the multicast routing table to build a multicast routing tree after storing the identification of the multicast channel in relation to the preceding intermediate routing node in the multicast routing table.

3. Method according to at least one of the preceding claims, including effecting transmission of the update message from a target routing node in the path from the source routing node towards the leaf routing node through the intermediate routing nodes using the unicast routing protocol, the target routing node being a starting point for the update message.

4. Method according to at least one of the preceding claims, including determining at the current intermediate routing node in the path from the source routing node to the leaf routing node whether the current intermediate routing node is operated in association with an update agent, and passing the update message to the update agent.

5. Method according to at least one of the preceding claims, including detecting whether the leaf routing node joins a multicast session.

6. Method according to at least one of the preceding claims, including selecting a target routing node as starting point for setting of multicast routing tables along the path from the target routing node to the leaf routing node, the target routing node being a starting point for the update message.

7. Method according to at claim 6, including sending a request message to the target routing node from the leaf routing node, requesting a target update agent associated with the target routing node to trigger the setting of multicast routing tables along the path from the target routing node to the leaf routing node.

8. Method according to at least one of claims 6 and 7, including selecting as target routing node an ingress routing node of a network domain including the leaf routing node, the ingress routing node handling data traffic with respect to the multicast session on entering the network domain.

9. Method according to claim 8, including receiving at the leaf routing node a local announcement from the ingress routing node handling data traffic with respect to the multicast session and selecting the ingress routing node as target routing node based on the local announcement.

10. Method according to claim 7, **characterized in that** the request message is sent across a plurality of network domains.

11. Method according to claim 10, **characterized in that** that the target routing node is the routing node nearest to the source of the multicast channel.

12. Method according to at least one of claims 6 and 7, wherein the target routing node is a first intermediate routing node routing the multicast channel, along the path of the multicast channel from the leaf routing node towards the source routing node.

13. Method according to claim 12, including
transmitting the request message along a unicast path from the leaf routing node towards the source of the multicast channel,
receiving the request message at an intermediate routing node, analysing the request message to identify whether the intermediate routing node already maintains information pertaining to the multicast channel and,
setting the intermediate routing node as target routing node, if the intermediate routing node already maintains information pertaining to the multicast channel.

14. Method according to claim 8 or 9, **characterized in that** the request message is sent upstream to the target routing node along a unicast path.

15. Multicast communication system for updating in an overlay to an existing multicast routing protocol a multicast routing table being referenced during multicast tree set up, comprising:
a source routing node of a multicast channel;
a leaf routing node of the multicast channel having multicast destinations connected to it;
a plurality of intermediate routing nodes carrying the multicast channel and, including:
at least one of the plurality of intermediate routing nodes including a multicast routing table and an update agent, the update agent including:
means for receiving an update message originating from a source node, comprising an identification of the multicast channel and an identification of a preceding intermediate routing node having an agent and being located upstream along a path towards the source of the multicast channel;
means for storing the identification of the multicast channel in association with the preceding intermediate node in the multicast routing table for subsequent multicast tree set up, wherein the multicast routing table is formed by the multicast routing protocol using a reverse path forwarding for constructing a path from the source routing node to the leaf routing node;
means for modifying the update message by changing the identification of the preceding intermediate node into the identification of the current intermediate node;
means for passing the modified update message to a local unicast routing protocol for further transmission towards the leaf routing node so that the multicast routing protocol uses the unicast path of the update message routed in direction from the source routing node to the leaf routing node for the reverse path forwarding.

16. Routing node of a multicast communication system for updating in an overlay to an existing multicast routing protocol a multicast routing table for being referenced during multicast tree set up, comprising
an update agent including:
means for receiving an update message originating from a source node, comprising an identification of the multicast channel and an identification of a preceding intermediate routing node having an agent and being located upstream along a path towards the source of the multicast channel;
means for storing the identification of the multicast channel in association with the preceding intermediate node in the multicast routing table for subsequent multicast tree set up, wherein the multicast routing table is formed by the multicast routing protocol using a reverse path forwarding for constructing a path from the source routing node to the leaf routing node;
means for modifying the update message by changing the identification of the preceding intermediate node into the identification of the current intermediate node;
means for passing the modified update message to a local unicast routing protocol for further transmission towards the leaf routing node so that the multicast routing protocol uses the unicast path of the update message routed in direction from the source routing node to the leaf routing node for the reverse path forwarding.

17. A program having instructions adapted to make a data processing device execute all the steps of the method of any one of claims 1 to 14.

18. A computer readable medium, in which a program is embodied, wherein the program is to make a data processing device execute all the steps of the method of any one of claims 1 to 14.

19. A computer program product comprising the computer readable medium of claim 18.

## Patentansprüche

1. Verfahren zum Aktualisieren in einer Überlagerung zu einem existierenden Multicast-Routing-Protokoll einer Multicast-Routing-Tabelle in einem Multicast-Kommunikationssystem mit einem Quell-Routing-Knoten eines Multicast-Kanals, einer Vielzahl von zwischengelegenen Routing-Knoten, die den Multicast-Kanal tragen und einem Blat-t-Routing-Knoten des Multicast-Kanals, der Multicast-Ziele mit diesem verbunden aufweist, wobei die Multicast-Routing-Tabelle von zumindest einem aus der Vielzahl von zwischengelegenen Routing-Knoten referenziert wird, während der Multicast-Baum aufgebaut wird, mit den Schritten:
Empfangen bei einem Aktualisierungsagenten, der mit den gegenwärtigen aus der Vielzahl von zwischengelegenen Routing-Knoten verknüpft ist, einer Aktualisierungsnachricht, die von einem Quell-Knoten stammt, mit einer Identifikation des Multicast-Kanals und einer Identifikation eines vorangehenden, zwischengelegenen Routing-Knotens mit einem Agent und der stromaufwärts entlang eines Pfades zu der Quelle des Multicast-Kanals lokalisiert ist;
Speichern der Identifikation des Multicast-Kanals in Verknüpfung mit dem vorangehenden, zwischengelegenen Knoten in der Multicast-Routing-Tabelle für einen nachfolgenden Multicast-Baumaufbau, wobei die Multicast-Routing-Tabelle durch das Multicast-Routing-Protokoll unter Verwendung eines umgekehrten Pfad-Weiterleitens zum Konstruieren eines Pfades von dem Quell-Routing-Knoten zu dem Blatt-Routing-Knoten gebildet wird; Modifizieren der Aktualisierungsnachricht durch Ändern der Identifikation des vorangehenden, zwischengelegenen Knotens in die Identifikation des gegenwärtigen, zwischengelegenen Knotens.
Weiterleiten der modifizierten Aktualisierungsnachricht an ein lokales Unicast-Routing-Protokoll zur weiteren Übertragung an den Blatt-Routing-Knoten derart, dass das Multicast-Routing-Protokoll den Unicast-Pfad der Aktualisierungsnachricht, die in Richtung von dem Quell-Routing-Knoten zu dem Blatt-Routing-Knoten geleitet wird, für das umgekehrte Pfad-Weiterleiten verwendet.

2. Verfahren nach Anspruch 1, wobei die Multicast-Routing-Tabelle gemäß einem Multicast-Routing-Protokoll gebildet wird und wobei das Multicast-Routing-Protokoll die Multicast-Routing-Tabelle verwendet, um einen Multicast-Routing-Baum zu errichten, nach einem Speichern der Identifikation des Multicast-Kanals in Bezug auf den vorangehenden, zwischengelegenen Routing-Knoten in der Multicast-Routing-Tabelle.

3. Verfahren nach zumindest einem der vorangehenden Ansprüche, einschließlich Bewirken einer Übertragung der Aktualisierungsnachricht von einem Ziel-Routing-Knoten in dem Pfad von dem Quell-Routing-Knoten zu dem Blatt-Routing-Knoten über die zwischengelegenen Routing-Knoten unter Verwendung des Unicast-Routing-Protokolls, wobei der Ziel-Routing-Knoten ein Startpunkt für die Aktualisierungsnachricht ist.

4. Verfahren nach zumindest einem der vorangehenden Ansprüche, einschließlich Bestimmen an dem gegenwärtigen zwischengelegenen Routing-Knoten in dem Pfad von dem Quell-Routing-Knoten zu dem Blatt-Routing-Knoten, ob der gegenwärtige, zwischengelegene Routing-Knoten in Verknüpfung mit einem Aktualisierungsagenten betrieben wird und Weiterleiten der Aktualisierungsnachricht an den Aktualisierungsagent.

5. Verfahren nach zumindest einem der vorangehenden Ansprüche, einschließlich eines Detektierens, ob der Blatt-Routing-Knoten an einer Multicast-Sitzung teilnimmt .

6. Verfahren nach zumindest einem der vorangehenden Ansprüche, einschließlich Auswählen eines Ziel-Routing-Knotens als einen Startpunkt zum Setzen von Multicast-Routing-Tabellen entlang des Pfades von dem Ziel-Routing-Knoten zu dem Blatt-Routing-Knoten, wobei der Ziel-Routing-Knoten ein Startpunkt für die Aktualisierungsnachricht ist.

7. Verfahren nach Anspruch 6, einschließlich eines Sendens einer Aufforderungsnachricht an den Ziel-Routing-Knoten von dem Blatt-Routing-Knoten, die einen Zielaktualisierungsagenten auffordert, der mit dem Ziel-Routing-Knoten verknüpft ist, das Setzen von Multicast-Routing-Tabellen entlang des Pfades von dem Ziel-Routing-Knoten zu dem Blatt-Routing-Knoten auszulösen.

8. Verfahren nach zumindest einem der Ansprüche 6 und 7, einschließlich Auswählen als Ziel-Routing-Knoten eines Eintritts-Routing-Knotens einer Netzwerkdomäne einschließlich des Blatt-Routing-Knotens, wobei der Eintritts-Routing-Knoten Datenverkehr in Bezug auf die Multicast-Sitzung beim Betreten der Netzwerkdomäne handhabt.

9. Verfahren nach Anspruch 8, einschließlich Empfangen an dem Blatt-Routing-Knoten einer lokalen Bekanntmachung von dem Eintritts-Routing-Knoten, der Datenverkehr in Bezug auf die Multicast-Sitzung handhabt und Auswählen des Eintritts-Routing-Knotens als einen Ziel-Routing-Knoten basierend auf der lokalen Bekanntmachung.

10. Verfahren nach Anspruch 7, **dadurch gekennzeichnet, dass** die Aufforderungsnachricht über eine Vielzahl von Netzwerkdomänen hinweggesendet wird.

11. Verfahren nach Anspruch 10, **dadurch gekennzeichnet, dass** der Ziel-Routing-Knoten der Routing-Knoten ist, der am nächsten zu der Quelle des Multicast-Kanals liegt.

12. Verfahren nach zumindest einem der Ansprüche 6 und 7, wobei der Ziel-Routing-Knoten ein erster zwischengelegener Routing-Knoten ist, der den Multicast-Kanal routet, entlang des Pfades des Multicast-Kanals von dem Blatt-Routing-Knoten zu dem Ziel-Routing-Knoten.

13. Verfahren nach Anspruch 12, einschließlich
Übertragen der Aufforderungsnachricht entlang eines Unicast-Weges von dem Blatt-Routing-Knoten zu der Quelle des Multicast-Kanals,
Empfangen der Aufforderungsnachricht an einem zwischengelegenen Routing-Knoten, der die Aufforderungsnachricht analysiert, um zu identifizieren, ob der zwischengelegene Routing-Knoten bereits Information aufrechterhält, die zu dem Multicast-Kanal gehört und
Setzen des zwischengelegenen Routing-Knotens als Ziel-Routing-Knoten, falls der zwischengelegene Routing-Knoten bereits Information aufrechterhält, die zu dem Multicast-Kanal gehört.

14. Verfahren nach Anspruch 8 oder 9, **dadurch gekennzeichnet, dass** die Aufforderungsnachricht stromaufwärts zu dem Ziel-Routing-Knoten entlang einem Unicast-Pfad gesendet wird.

15. Multicast-Kommunikationssystem zum Aktualisieren in einer Überlagerung zu einem existierenden Multicast-Routing-Protokoll einer Multicast-Routing-Tabelle, die während einem Multicast-Baum-Aufbau referenziert wird, mit:
einem Quell-Routing-Knoten eines Multicast-Kanals;
einem Blatt-Routing-Knoten des Multicast-Kanals, der mit diesem Multicast-Ziele verbunden aufweist;
einer Vielzahl von zwischengelegenen Routing-Knoten, die den Multicast-Kanal tragen und einschließlich:
zumindest einer der Vielzahl von zwischengelegenen Routing-Knoten eine Multicast-Routing-Tabelle und einen Aktualisierungsagenten einschließt, wobei der Aktualisierungsagent einschließt:
eine Vorrichtung zum Empfangen einer Aktualisierungsnachricht, die von einem Quell-Knoten stammt, mit einer Identifikation des Multicast-Kanals und einer Identifikation eines vorangehenden, zwischengelegenen Routing-Knotens mit einem Agenten und der stromaufwärts entlang eines Pfades zu der Quelle des Multicast-Kanals lokalisiert ist;
eine Vorrichtung zum Speichern der Identifikation des Multicast-Kanals in Verknüpfung mit dem vorangehenden, zwischengelegenen Knoten in der Multicast-Routing-Tabelle zum nachfolgenden Multicast-Baumaufbau, wobei die Multicast-Routing-Tabelle von dem Multicast-Routing-Protokoll unter Verwendung eines umgekehrten Pfadweiterleitens zum Konstruieren eines Pfades von dem Quell-Routing-Knoten zu dem Blatt-Routing-Knoten gebildet wird;
eine Vorrichtung zum Modifizieren der Aktualisierungsnachricht durch Ändern der Identifikation des vorangehenden, zwischengelegenen Knotens in die Identifikation des gegenwärtigen zwischengelegenen Knotens;
eine Vorrichtung zum Weiterleiten der modifizierten Aktualisierungsnachricht an ein lokales Unicast-Routing-Protokoll zur weiteren Übertragung zu dem Blatt-Routing-Knoten derart, dass das Multicast-Routing-Protokoll den Unicast-Pfad der Aktualisierungsnachricht, die in Richtung von dem Quell-Routing-Knoten zu dem Blatt-Routing-Knoten geleitet wird, für das umgekehrte Pfadweiterleiten verwendet.

16. Routing-Knoten eines Multicast-Kommunikationssystems zum Aktualisieren in einer Überlagerung zu einem existierenden Multicast-Routing-Protokoll einer Multicast-Routing-Tabelle zum Referenziertwerden während einem Multicast-Baumaufbau, mit:
einem Aktualisierungsagenten, einschließlich:
einer Vorrichtung zum Empfangen einer Aktualisierungsnachricht, die von einem Quell-Knoten stammt, mit einer Identifikation des Multicast-Kanals und einer Identifikation eines vorangehenden, zwischengelegenen Routing-Knotens mit einem Agent und der stromaufwärts entlang eines Pfades zu der Quelle des Multicast-Kanals lokalisiert ist;
einer Vorrichtung zum Speichern der Identifikation des Multicast-Kanals in Verknüpfung mit dem vorangehenden, zwischengelegenen Knoten in der Multicast-Routing-Tabelle zum nachfolgenden Multicast-Baumaufbau, wobei die Multicast-Routing-Tabelle von dem Multicast-Routing-Protokoll unter Verwendung eines umgekehrten Pfadweiterleitens zum Konstruieren eines Pfades von dem Quell-Routing-Knoten zu dem Blatt-Routing-Knoten gebildet wird;
einer Vorrichtung zum Modifizieren der Aktualisierungsnachricht durch Ändern der Identifikation des vorangehenden, zwischengelegenen Knotens in die Identifikation des gegenwärtigen zwischengelegenen Knotens;
einer Vorrichtung zum Weiterleiten der modifizierten Aktualisierungsnachricht an ein lokales Unicast-Routing-Protokoll zur weiteren Übertragung zu dem Blatt-Routing-Knoten derart, dass das Multicast-Routing-Protokoll den Unicast-Pfad der Aktualisierungsnachricht, die in einer Richtung von dem Quell-Routing-Knoten zu dem Blatt-Routing-Knoten geleitet wird, für das umgekehrte Pfadweiterleiten verwendet.

17. Programm mit Anweisungen, die angepasst sind, ein Datenverarbeitendes Gerät alle Schritte des Verfahrens nach einem der Ansprüche 1 bis 14 ausführen zu lassen.

18. Computer-lesbares Medium, in dem ein Programm verkörpert ist, wobei das Programm dazu dient, ein Datenverarbeitendes Gerät alle Schritte des Verfahrens nach einem der Ansprüche 1 bis 14 ausführen zu lassen.

19. Computerprogrammprodukt mit dem Computer-lesbaren Medium nach Anspruch 18.

## Revendications

1. Procédé de mise à jour dans un segment de recouvrement pour un protocole d'acheminement à diffusion multiple existant d'une table d'acheminement à diffusion multiple dans un système de communication à diffusion multiple comprenant un noeud d'acheminement source d'un canal à diffusion multiple, une pluralité de noeuds d'acheminement intermédiaires transportant le canal à diffusion multiple, et un noeud d'acheminement final du canal à diffusion multiple ayant des destinations à diffusion multiple reliées à ce dernier, la table d'acheminement à diffusion multiple étant référencée par au moins un noeud de la pluralité de noeuds d'acheminement intermédiaires pendant le paramétrage d'arbre à diffusion multiple, comprenant les étapes consistant à :
recevoir au niveau d'un agent de mise à jour associé à un noeud courant de la pluralité de noeuds d'acheminement intermédiaires un message de mise à jour provenant d'un noeud source, comprenant une identification du canal à diffusion multiple et une identification d'un noeud d'acheminement intermédiaire précédent ayant un agent et étant situé en amont le long d'un chemin vers la source du canal à diffusion multiple ;
stocker l'identification du canal à diffusion multiple en collaboration avec le noeud intermédiaire précédent dans la table d'acheminement à diffusion multiple pour le paramétrage ultérieur d'arbre à diffusion multiple, dans lequel la table d'acheminement à diffusion multiple est formée par le protocole d'acheminement à diffusion multiple en utilisant un réacheminement par chemin inverse pour construire un chemin allant du noeud d'acheminement source au noeud d'acheminement final ;
modifier le message de mise à jour en changeant l'identification du noeud intermédiaire précédent dans l'identification du noeud intermédiaire courant ;
passer le message de mise à jour modifié à un protocole d'acheminement à diffusion individuelle local pour une transmission ultérieure vers le noeud d'acheminement final de sorte que le protocole d'acheminement à diffusion multiple utilise le chemin à diffusion individuelle du message de mise à jour acheminé dans le sens allant du noeud d'acheminement source au noeud d'acheminement final pour le réacheminement par chemin inverse.

2. Procédé selon la revendication 1, dans lequel la table d'acheminement à diffusion multiple est formée selon un protocole d'acheminement à diffusion multiple et dans lequel le protocole d'acheminement à diffusion multiple utilise la table d'acheminement à diffusion multiple pour construire un arbre d'acheminement à diffusion multiple après le stockage de l'identification du canal à diffusion multiple par rapport au noeud d'acheminement intermédiaire précédent dans la table d'acheminement à diffusion multiple.

3. Procédé selon au moins une des revendications précédentes, comprenant l'accomplissement d'une transmission du message de mise à jour à partir d'un noeud d'acheminement cible dans le chemin allant du noeud d'acheminement source au noeud d'acheminement final par les noeuds d'acheminement intermédiaires en utilisant le protocole d'acheminement à diffusion individuelle, le noeud d'acheminement cible étant un point de départ pour le message de mise à jour.

4. Procédé selon au moins une des revendications précédentes, comprenant la détermination au niveau du noeud d'acheminement intermédiaire courant dans le chemin allant du noeud d'acheminement source au noeud d'acheminement final si le noeud d'acheminement intermédiaire courant est mis en oeuvre en collaboration avec un agent de mise à jour, et le passage du message de mise à jour à l'agent de mise à jour.

5. Procédé selon au moins une des revendications précédentes, comprenant la détection si le noeud d'acheminement final rejoint une session à diffusion multiple.

6. Procédé selon au moins une des revendications précédentes, comprenant la sélection d'un noeud d'acheminement cible comme point de départ pour le paramétrage de tables d'acheminement à diffusion multiple le long du chemin allant du noeud d'acheminement cible au noeud d'acheminement final, le noeud d'acheminement cible étant un point de départ pour le message de mise à jour.

7. Procédé selon la revendication 6, comprenant l'envoi d'un message de demande au noeud d'acheminement cible en provenance du noeud d'acheminement final, demandant à un agent de mise à jour cible associé au noeud d'acheminement cible de déclencher le paramétrage de tables d'acheminement à diffusion multiple le long du chemin allant du noeud d'acheminement cible au noeud d'acheminement final.

8. Procédé selon au moins une des revendications 6 et 7, comprenant la sélection en tant que noeud d'acheminement cible d'un noeud d'acheminement d'entrée d'un domaine de réseau comprenant le noeud d'acheminement final, le noeud d'acheminement d'entrée traitant un trafic de données en ce qui concerne la session à diffusion multiple lors de l'entrée dans le domaine de réseau.

9. Procédé selon la revendication 8, comprenant la réception au niveau du noeud d'acheminement final d'une annonce locale en provenance du noeud d'acheminement d'entrée traitant un trafic de données en ce qui concerne la session à diffusion multiple, et la sélection du noeud d'acheminement d'entrée en tant que noeud d'acheminement cible en se basant sur l'annonce locale.

10. Procédé selon la revendication 7, **caractérisé en ce que** le message de demande est envoyé à travers une pluralité de domaines de réseau.

11. Procédé selon la revendication 10, **caractérisé en ce que** le noeud d'acheminement cible est le noeud d'acheminement le plus proche de la source du canal à diffusion multiple.

12. Procédé selon au moins une des revendications 6 et 7, dans lequel le noeud d'acheminement cible est un premier noeud d'acheminement intermédiaire acheminant le canal à diffusion multiple, le long du chemin du canal à diffusion multiple allant du noeud d'acheminement final au noeud d'acheminement source.

13. Procédé selon la revendication 12, comprenant:
la transmission du message de demande le long d'un chemin à diffusion individuelle allant du noeud d'acheminement final à la source du canal à diffusion multiple,
la réception du message de demande au niveau d'un noeud d'acheminement intermédiaire, l'analyse du message de demande pour identifier si le noeud d'acheminement intermédiaire maintient déjà des informations se rapportant au canal à diffusion multiple, et
le paramétrage du noeud d'acheminement intermédiaire en tant que noeud d'acheminement cible, si le noeud d'acheminement intermédiaire maintient déjà des informations se rapportant au canal à diffusion multiple.

14. Procédé selon la revendication 8 ou 9, **caractérisé en ce que** le message de demande est envoyé en amont au noeud d'acheminement cible le long d'un chemin à diffusion individuelle.

15. Système de communication à diffusion multiple pour la mise à jour dans un segment de recouvrement pour un protocole d'acheminement à diffusion multiple existant d'une table d'acheminement à diffusion multiple référencée pendant le paramétrage d'un arbre à diffusion multiple fondé, comprenant :
un noeud d'acheminement source d'un canal à diffusion multiple ;
un noeud d'acheminement final du canal à diffusion multiple ayant des destinations à diffusion multiple reliées à ce dernier ;
une pluralité de noeuds d'acheminement intermédiaires transportant le canal à diffusion multiple et, comprenant:
au moins un noeud de la pluralité de noeuds d'acheminement intermédiaires comprenant une table d'acheminement à diffusion multiple et un agent de mise à jour, l'agent de mise à jour comprenant:
un moyen pour recevoir un message de mise à jour provenant d'un noeud source, comprenant une identification du canal à diffusion multiple et une identification d'un noeud d'acheminement intermédiaire précédent ayant un agent et étant situé en amont le long d'un chemin vers la source du canal à diffusion multiple ;
un moyen pour stocker l'identification du canal à diffusion multiple en collaboration avec le noeud intermédiaire précédent dans la table d'acheminement à diffusion multiple pour le paramétrage ultérieur d'arbre à diffusion multiple, dans lequel la table d'acheminement à diffusion multiple est formée par le protocole d'acheminement à diffusion multiple en utilisant un réacheminement par chemin inverse pour construire un chemin allant du noeud d'acheminement source au noeud d'acheminement final ;
un moyen pour modifier le message de mise à jour en changeant l'identification du noeud intermédiaire précédent dans l'identification du noeud intermédiaire courant ;
un moyen pour passer le message de mise à jour modifié à un protocole d'acheminement à diffusion individuelle local pour la transmission ultérieure au noeud d'acheminement final de sorte que le protocole d'acheminement à diffusion multiple utilise le chemin à diffusion individuelle du message de mise à jour acheminé dans le sens allant du noeud d'acheminement source au noeud d'acheminement final pour le réacheminement par chemin inverse.

16. Noeud d'acheminement d'un système de communication à diffusion multiple pour la mise à jour dans un segment de recouvrement pour un protocole d'acheminement à diffusion multiple existant d'une table d'acheminement à diffusion multiple pour être référencée pendant le paramétrage d'arbre à diffusion multiple, comprenant:
un agent de mise à jour comprenant:
un moyen pour recevoir un message de mise à jour provenant d'un noeud source, comprenant une identification du canal à diffusion multiple et une identification d'un noeud d'acheminement intermédiaire précédent ayant un agent et étant situé en amont le long d'un chemin vers la source du canal à diffusion multiple ;
un moyen pour stocker l'identification du canal à diffusion multiple en collaboration avec le noeud intermédiaire précédent dans la table d'acheminement à diffusion multiple pour le paramétrage ultérieur d'arbre à diffusion multiple, dans lequel la table d'acheminement à diffusion multiple est formée par le protocole d'acheminement à diffusion multiple en utilisant un réacheminement par chemin inverse pour construire un chemin allant du noeud d'acheminement source au noeud d'acheminement final ;
un moyen pour modifier le message de mise à jour en changeant l'identification du noeud intermédiaire précédent dans l'identification du noeud intermédiaire courant ; un moyen pour passer le message de mise à jour modifié à un protocole d'acheminement à diffusion individuelle local pour une transmission ultérieure au noeud d'acheminement final de sorte que le protocole d'acheminement à diffusion multiple utilise le chemin à diffusion individuelle du message de mise à jour acheminé dans le sens allant du noeud d'acheminement source au noeud d'acheminement final pour le réacheminement par chemin inverse.

17. Programme comportant des instructions conçues pour faire qu'un dispositif de traitement de données exécute toutes les étapes du procédé selon l'une quelconque des revendications 1 à 14.

18. Support lisible par ordinateur, dans lequel un programme est incorporé, dans lequel le programme doit faire qu'un dispositif de traitement de données exécute toutes les étapes du procédé selon l'une quelconque des revendications 1 à 14.

19. Produit formant programme informatique comprenant le support lisible par ordinateur de la revendication 18.
